# EUROPÄISCHE PATENTSCHRIFT

(11) **EP 0 602 451 B1**
(45) Veröffentlichungstag und Bekanntmachung des Hinweises auf die Patenterteilung: **26.02.1997**
(21) Anmeldenummer: 93119329.6
(22) Anmeldetag: 01.12.1993
(51) Int. Cl.: B60J 3/02, B29C 44/04

(54) **Sonnenblende für Fahrzeuge sowie Verfahren und Vorrichtung zum Herstellen derselben**
Sun visor for vehicles and method and device for manufacturing
Pare-soleil pour véhicule et procédé et dispositif pour la fabrication

(30) Priorität: 18.12.1992 DE 4242939
(43) Veröffentlichungstag der Anmeldung: 22.06.1994
(73) Patentinhaber: BECKER GROUP EUROPE GmbH, 42285 Wuppertal (DE)
(72) Erfinder: Viertel, Lothar, D-66802 Altforweiler (DE); Welter, Patrick, F-57730 La Chambre (FR); Lecorvaisier, René, F-57490 Hombourg-Haut (FR); Mosser, Serge, F-57220 Bambiderstroff (FR); Pompino, Karl-Heinz, D-42113 Wuppertal (DE)

(56) Entgegenhaltungen:
- EP-A- 0 143 408
- EP-A- 0 530 740
- US-A- 4 304 810
- US-A- 4 584 230
- US-A- 4 763 946

## Beschreibung

Die Erfindung bezieht sich auf eine Sonnenblende für Fahrzeuge mit einem relativ flachen, angenähert rechteckig gestalteten, eine Umhüllung aufweisenden Sonnenblendenkörper aus Schaumkunststoff und zumindest einer sich am oder mit geringem Abstand parallel zum umlaufenden Rand desselben erstreckenden Aussteifung. Die Erfindung bezieht sich ferner auf ein Verfahren zum Herstellen der Sonnenblende sowie auf eine Vorrichtung zum Durchführen des Verfahrens. Eine Sonnenblende der eingangs genannten Art ist in der EP-A-0 143 408 gezeigt.

Sonnenblenden für Fahrzeuge sind darüber hinaus in den vielfältigsten Ausführungsformen bekannt. Alle bekannten Sonnenblenden haben miteinander einen vielteiligen Aufbau und weiterhin miteinander gemeinsam, daß sie aus Bestandteilen der unterschiedlichsten Materialien zusammengebaut sind. Häufig bestehen die Sonnenblendenkörper der Sonnenblenden aus einer aus Stahldraht, aus Preßpappe, aus PVC-Spritzlingen oder aus einer Kombination der genannten Teile gebildeten Aussteifung, aus Polsterungen aus Schaumkunststoff, aus Lagerböckchen aus PVC und aus Ummantelungen, die aus PVC, aus Textilmaterial, Leder od. dgl. gebildet sind. Der herkömmliche Aufbau der Sonnenblenden ist relativ aufwendig und teuer und macht es schwer oder auch oftmals unmöglich, die Sonnenblenden bei der Verschrottung eines Fahrzeugs wieder in die Einzelteile zu zerlegen mit dem Ziel, die Einzelteile einer Wiederverwertung zuzuführen. Ein weiterer Nachteil der bekannten Sonnenblenden besteht darin, daß sie zu schwer sind.

Durch die US-A- 4,584,230 ist ein sinnvolles Verfahren zum Herstellen einer verstärkten Schaumharzplatte zur Verwendung als Fahrzeugplatte wie zum Beispiel eine Türinnenverkleidung, eine Dachauskleidung oder eine Instrumententafel bekanntgeworden. Um eine Schaumharzplatte mit Verstärkungen zu schaffen, die ein integraler Bestandteil der Platte sind und bündig auf deren Oberfläche liegen, ist gemäß diesem Verfahren vorgesehen, daß eine Schaumharzplatte mit einem oder mehreren hochdichten Verstärkungsabschnitten gebildet wird, die eine höhere Dichte aufweisen als der Rest der Platte und daher steifer sind. Der Versteifungsabschnitt wird durch Kompression während der Herstellung verdichtet. Die Herstellung einer Schaumharzplatte nach der Lehre der US-A-4,584,230 umfaßt eine Kompressionsstufe zur Herstellung des hochdichten Verstärkungsabschnitts nach einer Vorfertigungsstufe, in der ein Harzzwischenstoff zum Schäumen gebracht wird und sich in einem gewissen Umfang innerhalb einer Form ausdehnt. Das daraus entstehende einheitliche Schaumharzelement weist an Stellen, an denen sich Verstärkungsabschnitte der fertigen Platte befinden werden, eine Anzahl von Vorsprüngen auf. Die Vorsprünge werden dann auf Gleichheit mit dem Rest der Platte komprimiert und ausgehärtet.

Der vorliegenden Erfindung liegt nun die Aufgabe zugrunde eine Sonnenblende der eingangs genannten Art unter Ausnutzung des durch die US-A-4 584 230 bekanntgewordenen Verfahrens dahingehend zu verbessern, daß sie einfacher und kostengünstiger als herkömmliche Sonnenblenden hergestellt werden kann, daß sie aus wesentlich weniger Einzelteilen besteht, daß sie ein nur geringes Gewicht aufweist, daß sie dennoch eine den technischen Ansprüchen vollauf genügende Stabilität besitzt und daß sie in besonders einfacher Weise zu recyclen ist. Aufgabe der Erfindung ist es ferner, ein Verfahren zum Herstellen einer solchen Sonnenblende aufzuzeigen, wie auch eine Vorrichtung zum Durchführen des Verfahrens zu schaffen.

Die Aufgabe wird gegenständlich erfindungsgemäß dadurch gelöst, daß der Sonnenblendenkörper einstückig mit der zumindest einen, am oder nahe des Sonnenblendenkörpers umlaufenden Aussteifung ausgebildet ist und ebenso wie die Aussteifung aus Polypropylenpartikelschaum besteht, wobei sich die zumindest eine Aussteifung vom übrigen Sonnenblendenkörpermaterial durch eine wesentlich höhere Härte und Steifigkeit unterscheidet, daß die zumindest eine Aussteifung sich auch über einen Eckbereich des Sonnenblendenkörpers erstreckt, in dem sich eine Bohrung als Lageraufnahme für eine Sonnenblendenachse befindet und daß die Umhüllung unmittelbar am Sonnenblendenkörper durch Verändern der Oberflächenstruktur desselben angeformt ist.

Die besonderen Vorteile der erfindungsgemäßen Maßnahme bestehen darin, daß auf die separate Herstellung und Anordnung herkömmlicher Aussteifungssysteme verzichtet und die Aussteifung zum integrierten Bestandteil des Sonnenblendenkörpers gemacht wurde. Daraus ergibt sich weniger Teileherstellung, weniger Teileverwaltung, Kostenersparnis, Gewichtsreduzierung und weniger Qualitätsprobleme wie auch die Einsparung von Lagergehäusen, die bisher erforderlich waren. Zudem kann durch die erfindungsgemäßen Maßnahmen nunmehr auf das separate Herstellen und Anbringen der Umhüllung verzichtet werden.

Gemäß einer Ausgestaltung der Erfindung können zwei rahmenförmig umlaufende Aussteifungen vorgesehen sein, die sich von den Flachseiten des Sonnenblendenkörpers her aufeinanderzu in dessen Inneres hinein erstrecken. Nach einer anderen Ausführungsform befindet sich die zumindest eine Aussteifung im Innern des Sonnenblendenkörpers und ist außenseitig mit Polypropylenpartikelschaum abgedeckt, der dem übrigen Sonnenblendenkörpermaterial entspricht.

Der Sonnenblendenkörper kann aus zwei Hälften bestehen, die in der Mittelebene des Sonnenblendenkörpers aneinanderliegen, wobei zumindest eine der Hälften mit einer Aussteifung ausgebildet ist. Dabei können die Hälften miteinander verklebt oder verschweißt oder auch zusätzlich miteinander verzahnt sein, wobei vorspringende Wülste an der einen Hälfte in zurückspringende Nuten der anderen Hälfte eingreifen. Es empfiehlt sich, daß die vorspringenden Wülste eine wesentlich höhere Härte und Steifigkeit als das übrige Sonnenblendenkörpermaterial aufweisen und damit die Aussteifungsfunktion übernehmen.

Zur Vereinfachung der Montage trägt bei, daß die beiden Sonnenblendenkörperhälften über ein Filmscharnier miteinander verbunden sind.

Eine andere Ausfünrungsform der Erfindung sieht vor, daß zumindest eine der beiden Sonnenblendenkörperhälften eine sich über die gesamte Fläche erstreckende Aussteifung aufweist.

Eine Weiterbildung der Erfindung besteht darin, daß der Sonnenblendenkörper eine Vertiefung in einer seiner Hauptflächen aufweist, die ganzflächig oder zumindest am Umfangsrand ausgesteift ist und zur Aufnahme eines einen Spiegel tragenden Rahmens dient, wobei der Spiegelrahmen Zapfen mit hinterschnittenen Ringwülsten trägt, die in Sackbohrungen des Sonnenblendenkörpers eingepreßt sind.

Der Sonnenblendenkörper kann zudem an dem der Lageraufnahme abgewandten Endbereich eine randoffene Ausnehmung aufweisen, welche eine einen Gegenlagerstift tragende Krampe aufnimmt, wobei die Krampe mit Verankerungszapfen in Stecköffnungen des Sonnenblendenkörpers eingreift.

Von besonderer Bedeutung ist, daß die Aussteifung oder Aussteifungen durch eine bleibende Verformung zusammengepreßter Materialbereiche des Sonnenblendenkörpers gebildet ist bzw. sind.

Der Sonnenblendenkörper ist mit einer Umhüllung ausgestattet und die Umhüllung ist aus Polypropylenmaterial gebildet. Von besonderem Vorteil ist dabei eine weitergehende Maßnahme der Erfindung die vorsieht, daß die Umhüllung unmittelbar am Sonnenblendenkörper durch Verändern der Oberflächenstruktur desselben angeformt ist. Dabei hat es sich als besonders vorteilhaft erwiesen, daß die Umhüllung durch Erweichen der Sonnenblendenkörperoberfläche und Einbringen einer Prägestruktur in die erweichte Sonnenblendenkörperoberfläche gebildet ist.

Eine weitere Ausgestaltung der Erfindung sieht vor, daß der Sonnenblendenkörper an einem stirnseitgen Endbereich mit sich vom oberen zum unteren Rand durchgehend erstreckenden Einkerbungen, die von beiden Hauptflächen des Sonnenblendenkörpers ausgehen, versehen ist. Diese Maßnahme ist aufgrund des gewählten Materials für den Sonnenblendenkörper einfach durchzuführen, läßt keinen Bruch durch Materialermüdung befürchten und ermöglicht eine Konturanpassung des Sonnenblendenkörpers im A-Säulenbereich, und zwar links und rechts gleichermaßen.

Zum Herstellen der Sonnenblende dient ein Verfahren, das sich erfindungsgemäß dadurch auszeichnet, daß man zunächst einen Sonnenblendenkörper herstellt, indem man in einen Formhohlraum einer Form eine Füllung aus Polypropylenpartikeln einbringt und durch Einleiten von Dampf oder Heißluft in die Form die Partikel erhitzt, so daß sie erweichen, sich ausdehnen und miteinander verschweißen, daß man den so gewonnenen Sonnenblendenkörper senkrecht zu seiner Mittelebene mit Druck und Wärme zwecks einer Materialzusammenpressung beaufschlagt und damit der Bildung zumindest einer Aussteifung unterzieht und daß man den Sonnenblendenkörper schließlich mit einer Umhüllung ausstattet indem man die Oberflächenschicht desselben plastifiziert und prägebearbeitet.

Mit dem erfindungsgemäßen Verfahren läßt sich demnach ein Sonnenblendenkörper mit einer Aussteifung und Umhüllung einstückig und materialeinheitlich herstellen, der lediglich im Aussteifungsbereich einer Druckbeaufschlagung unterzogen wird, die eine gezielte Gefügeverdichtung bewirkt.

Das erfindungsgemäße Verfahren kann mit Vorteil dadurch ausgestaltet werden, daß man im ersten Verfahrensschritt einen Sonnenblendenkörper mit zumindest an einer seiner Hauptflächen aus der Sonnenblendenkörperebene hervortretenen Flächen, Rippen, Wülsten od. dgl. formt und daß man hiernach nur die aus der Sonnenblendenkörperebene hervortretenden Flächen, Rippen, Wülste od. dgl. einer Druckbehandlung unterzieht, und zwar solange, bis die hervortretenden Bereiche in die Sonnenblendenkörperebene zurückgedrängt sind.

Eine andere Ausgestaltung des erfindungsgemäßen Verfahrens sieht vor, daß man im ersten Verfahrensschritt einen Sonnenblendenkörper mit zwei über ein Filmscharnier miteinander verbundenen Hälften formt, daß man dabei die eine Hälfte mit zumindest einem Wulst und die andere Hälfte mit zumindest einer Nut ausbildet, daß man hiernach nur den Wulst einer Druckbehandlung unterzieht, um die Höhe derselben unter Bildung einer Aussteifung zu reduzieren und daß man den Sonnenblendenkörper nach dem Erkalten aus der Form herausnimmt und den Wulst in die Nut durch Zusammenklappen der Sonnenblendenhälften einbringt. Diese Maßnahmen haben den Vorteil, daß die Aussteifung des Sonnenblendenkörpers von außen nicht fühlbar ist.

Nach dem Zusammenpressen der Sonnenblendenkörperbereiche, die für eine Aussteifung vorgesehen sind, sollen sich die Partikel des Polypropylenmaterials nicht wieder entspannen oder ausdehnen können, was dadurch verhindert wird, daß der Sonnenblendenkörper zum Zusammenpressen des Sonnenblendenkörpermaterials mit Druck und Wärme beaufschlagt wird.

Wenn man am Sonnenblendenkörper eine von außen nach innen gerichtete Materialzusammenpressung vorsieht, empfiehlt es sich, den sich an der Sonnenblenderkörperoberfläche ergebenden Freiraum jeweils wieder mit Polypropylenpartikeln zu verfüllen und auszuschäumen.

Das erfindungsgemäße Verfahren sieht vor, daß man den Sonnenblendenkörper zwecks Ausstattung mit einer Umhüllung einer Weiterbearbeitung unterzieht, indem man die Oberflächenschicht desselben plastifiziert und prägebearbeitet. Hierdurch wird ein Umwandeln des Partikelschaumgefüges im Oberflächenbereich des Sonnenblendenkörpers unter Wärme und Druck erzielt. Die Umwandlung des Partikelschaumgefüges erfolgt in eine kompakte geschlossene Oberfläche und stellt sicher, daß sich keine Polypropylenpartikel mehr an der strukturierten Oberfläche abzeichnen können.

Die zum Durchführen des Verfahrens vorgesehene Vorrichtung umfaßt ein aus zwei Hälften gebildetes Formwerkzeug mit einem Formhohlraum zwischen den Hälften und zumindest einen zum Formwerkzeug gehörenden Druckstempel, wobei der Druckstempel mit dem Formhohlraum in Verbindung steht, um durch Verschieben den Öffnungquerschnitt des Formhohlraums bzw. den Querschnitt des im Formhohlraum ausgebildeten Sonnenblendenkörpers zu verringern und wobei im Hinblick darauf, daß das Partikelgefüge des Sonnenblendenkörpers nur im Bereich der Aussteifung verändert bzw. verdichtet werden soll, empfiehlt es sich, daß der zumindest eine Druckstempel Mittel zum Aufheizen und Abkühlen aufweist.

Die Vorrichtung umfaßt zum Herstellen einer Sonnenblendenkörperumhüllung mit besonderem Vorteil weiterhin eine Unterform mit einem den Sonnenblendenkörper bis etwa zur Längsmittenebene aufnehmenden Hohlraum und einen gegen die Unterform bewegbaren Prägestempel mit einem den aus der Unterform vorstehenden Bereich des Sonnenblendenkörpers umschließenden Hohlraum. Dabei sind die mit dem Sonnenblendenkörper in Berührung kommenden Wandungsflächen des Prägestempelhohlraums strukturiert. Der Prägestempel weist Mittel zum Aufheizen und Plastifizieren der ihm benachbarten Sonnenblendenkörperoberfläche auf.

Eine Weiterbildung kann darin bestehen, daß auch die Unterform als Prägestempel mit strukturierter Hohlraumwandung und Mitteln zum Aufheizen und Plastifizieren der ihm benachbarten Sonnenblendenkörperoberfläche ausgebildet ist.

Anhand der Zeichnung werden im folgenden Ausführungsbeispiele der Erfindung näher erläutert und es zeigen:
- Fig. 1.1: eine Sonnenblende in Ansicht,
- Fig. 1.2: die Sonnenblende nach Fig. 1.1 in einer Fertigungstufe,
- Fig. 1.3 bis 1.7: jeweils Schnittdarstellungen entsprechend der Schnittlinie 1.3 - 1.7 in Fig. 1.2 in jeweils zwei Fertigungsstufen,
- Fig. 2.1: eine zweite Sonnenblende in Ansicht,
- Fig. 2.2: die Sonnenblende nach Fig. 2.1 in einer Fertigungsstufe,
- Fig. 2.2.1: einen Schnitt folgend der Schnittlinie nach Fig. 2.2 in zwei Fertigungsstufen,
- Fig. 2.3: drei Fertigungsstufen der Sonnenblende nach Fig. 2.1 / Fig. 2.2 in einer abgewandelten Ausführungsform,
- Fig. 2.4: eine weitere alternative Ausführungsform der Sonnenblende nach Fig. 2.1,
- Fig. 2.5: eine Einzelheit der Sonnenblende nach Fig. 2.1,
- Fig. 3.1: eine dritte Sonnenblende in Ansicht,
- Fig. 3.2 und 3.3: jeweils einen Schnitt folgend der Schnittlinie nach Fig. 3.1,
- Fig. 4.1: eine vierte Sonnenblende in Ansicht,
- Fig. 4.2: Fertigungsstufen für die Herstellung der Sonnenblende nach Fig. 4.1,
- Fig. 4.3, 4.3.1 und 4.3.2: jeweils Einzelheiten der Sonnenblende nach Fig. 4.1,
- Fig. 5: eine Vorrichtung zum Herstellen eines Sonnenblendenkörpers und
- Fig. 6: eine Vorrichtung zum Herstellen einer Sonnenblendenummantelung.

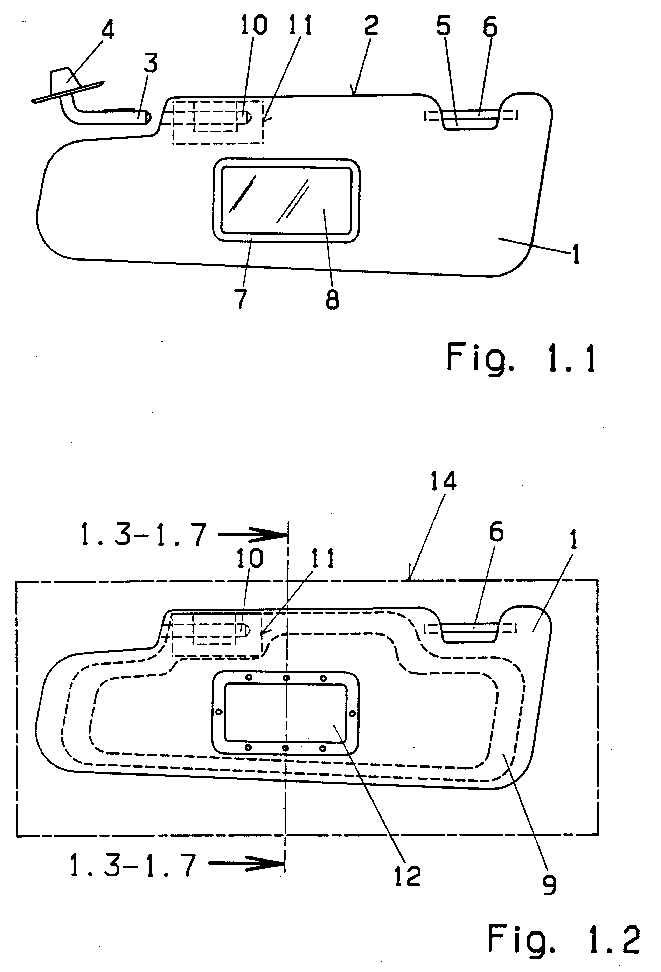

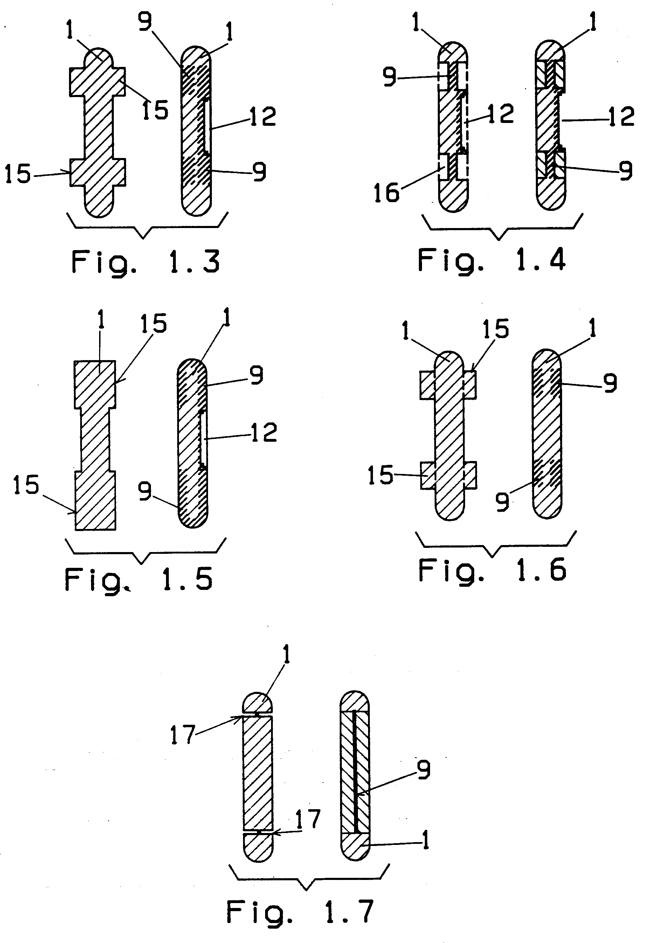

Die Sonnenblende nach Fig. 1.1 umfaßt einen Sonnenblendenkörper 1, in dessen oberen Längskantenbereich 2 zeichnungslinksseitig eine Sonnenblendenachse 3 eingelagert ist. Die Sonnenblendenachse 3 ist anderendig in einem an der Fahrzeugkarosserie befestigbaren Lagerböckchen 4 gelagert. Zeichnungsrechtsseitig weist der Sonnenblendenkörper 1 einen, eine Ausnehmung 5 querenden Gegenlagerzapfen 6 auf, der lösbar in ein nicht gezeigtes Gegenlagerböckchen einrastbar ist. Der Sonnenblendenkörper 1 trägt an einer Flachseite einen in einem Spiegelrahmen 7 eingefaßten Spiegel 8.

Der Sonnenblendenkörper 1 ist einstückig mit einer Aussteifung 9 ausgebildet und besteht ebenso wie die Aussteifung 9 aus Polypropylenpartikelschaumstoff. In Fig. 1.2 ist die Aussteifung 9 rahmenförmig ausgebildet und erstreckt sich umlaufend nahe des Sonnenblendenkörperrandes. Die Aussteifung 9 erstreckt sich weiterhin auch über einen Eckbereich des Sonnenblendenkörpers 1 und bildet hier eine mit einer Bohrung 10 versehene Lageraufnahme 11 für die Sonnenblendenachse 3.

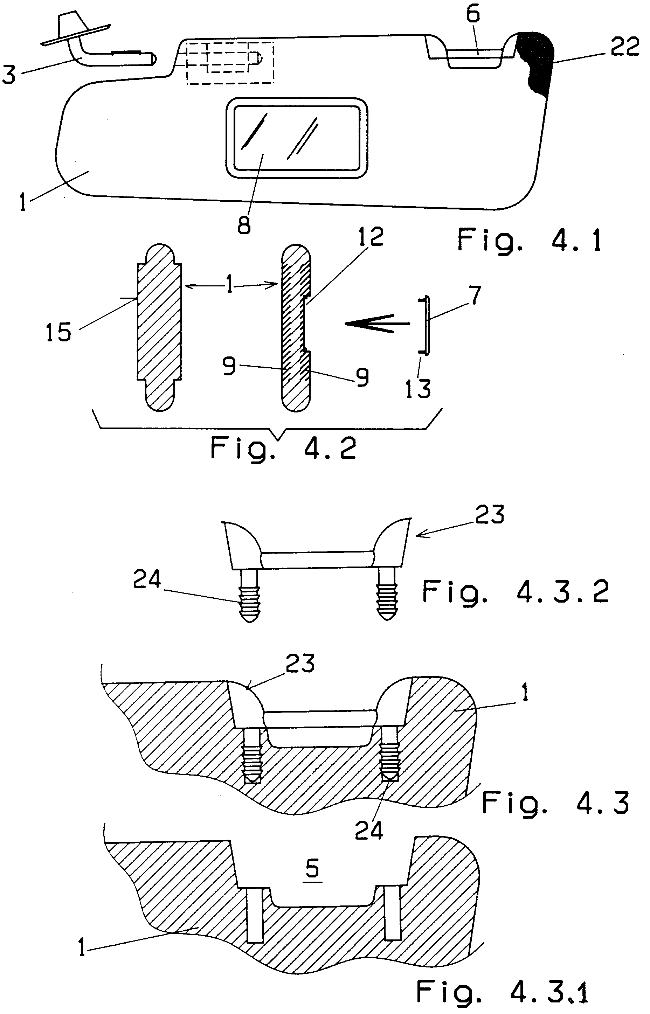

Eine zweite Aussteifung 9 des Sonnenblendenkörpers 1 ist in einer stufenförmig abgesetzten Aussparung 12, die für die Aufnahme des Spiegels 8 mit Spiegelrahmen 7 dient, vorgesehen. In der oberen Stufe befinden sich Stecköffnungen für am Spiegelrahmen 7 angeordnete Verankerungszapfen 13 (vgl. Fig. 4.2).

In Fig. 1.2 ist der Sonnenblendenkörper 1 nach Fig. 1.1 gezeigt und man kann den Aussteifungsbereich 9 durch die gestrichelten Linien deutlich erkennen. Es sei bemerkt, daß die Aussteifung 9 auch durch diagonal, längs und/oder quer verlaufende Zonen ergänzt werden kann, wenn sich die dargestellte Aussteifung z.B. bei besonders großen Sonnenblenden als noch zu instabil erweisen sollte. Fig. 1.2 zeigt mit strichpunktierten Linien einen Umhüllungszuschnitt 14 für eine etwa erwünschte separate Umhüllung des Sonnenblendenkörpers 1.

In den Fig. 1.3 bis 1.7 sind nun Beispiele des Sonnenblendenkörperaufbaus im Querschnitt gezeigt. Dabei ist in Fig. 1.3 linksseitig ein Sonnenblendenkörper 1 ohne und rechtsseitig mit einer Aussteifung 9 dargestellt. Der Sonnenblendenkörper 1 wird demnach mit beidseitig aus der Sonnenblendenkörperebene heraustretenden Rippen 15 gefertigt, die anschließend unter Aufwendung von Wärme und Druck in die Sonnenblendenkörperebene gedrängt werden. Die feine Schraffur soll die Aussteifung 9, die sich auch im Bereich der Aussparung 12 befindet, verdeutlichen. Die fein schraffierten Zonen bilden, wie erwähnt die Aussteifung 9 des Sonnenblendenkörpers 1 und unterscheiden sich vom übrigen Sonnenblendenkörpermaterial durch eine wesentlich höhere Dichte, Härte und Steifigkeit.

In Fig. 1.4 ist die Ausgangsform des Sonnenblendenkörpers 1 gestrichelt gezeigt. Durch von den Breitseiten des Sonnenblendenkörpers her eingebrachte Nuten 16 ist eine umlaufende Aussteifung 9 durch Materialverdichten hergestellt. Die Nuten 16 sind nachträglich mit Polypropylenpartikeln verfüllt und ausgeschäumt. Hierbei ist auch der Einsatz von farblich abweichendem Material denkbar.

In Fig. 1.5 linke Seite ist ein doppel T-förmiger Ausgangskörper gezeigt, dessen obere und untere aus der Sonnenblendenkörperebene hervorstehenden Rippen 15 in die Sonnenblendenkörperebene unter Ausbildung einer Aussteifung 9 gedrangt werden, wobei auch hier wieder Wärme und Druck, wie bei allen anderen Ausführungsbeispielen auch, zum Einsatz gelangen.

Das Ausführungsbeispiel nach Fig. 1.6 unterscheidet sich von dem nach Fig. 1.3 dadurch, daß die Rippen 15 des Sonnenblendenkörpers 1 unterbrochen ausgeführt sind.

Beim Ausführungsbeispiel nach Fig. 1.7 ist in der ersten Stufe ein Sonnenblendenkörper 1 mit beidseitig umlaufendem Spalt 17 gebildet. Der Bereich zwischen den Spalten 17 ist von beiden Seiten her unter Ausbildung einer plattenförmigen Aussteifung 9 verpreßt. Die beidseitig gebildeten Freiräume sind nachträglich, wie schon anhand von Fig. 1.4 erläutert ausgeschäumt. Auf der Körperoberfläche befinden sich dadurch keine harten Übergangszonen.

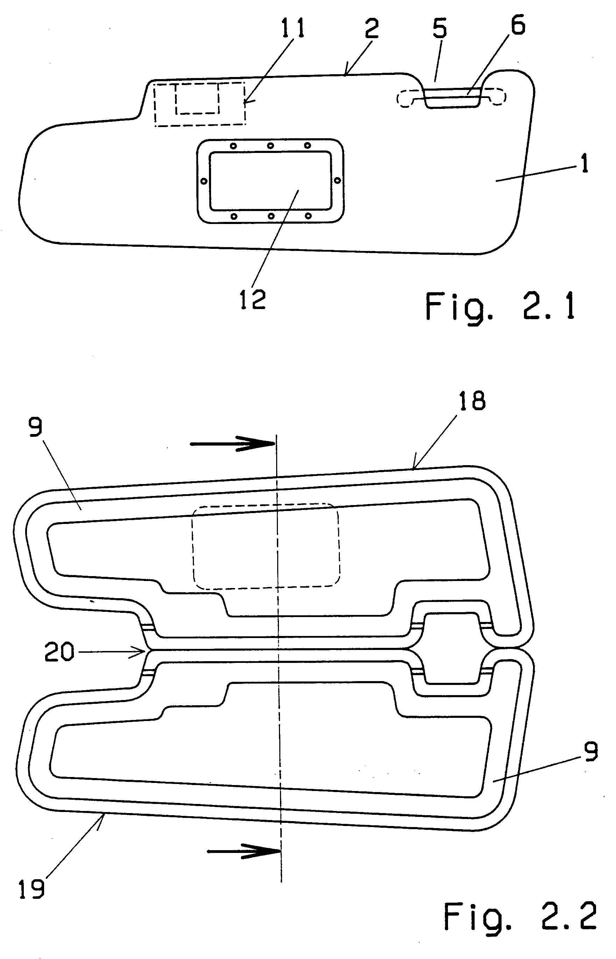

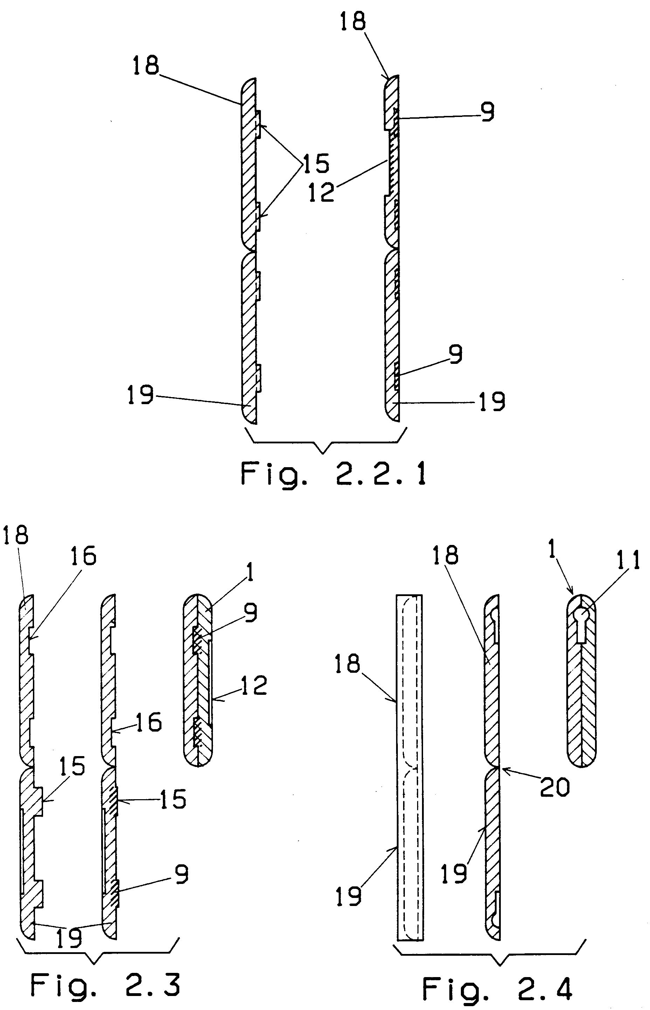

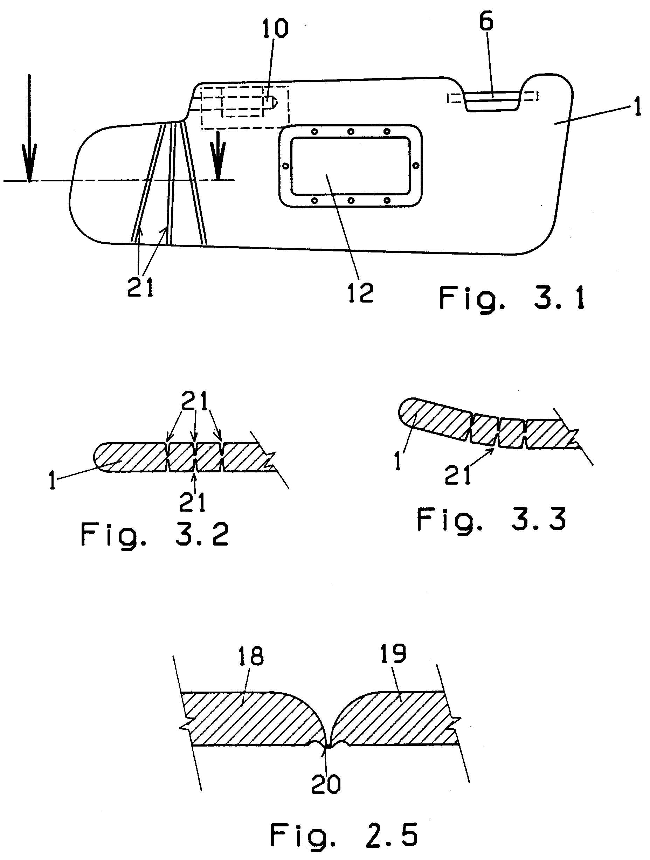

Der Sonnenblendenkörper 1 nach Fig. 2.1 entspricht vom Aussehen her dem nach Fig. 1.1. Er ist jedoch aus zwei Halbschalen 18 und 19 zusammengesetzt, wobei diese über ein Filmscharnier 20 (vgl. Fig. 2.5) miteinander verbunden sein können. Fig. 2.2 zeigt, ähnlich wie Fig. 1.2 den möglichen Konturverlauf der Aussteifung 9.

In Fig. 2.2.1 ist gezeigt, daß die Halbschalen 18, 19 auf ihren aneinanderzuliegenkommenden Flächen überstehende Rippen 15 aufweisen, die durch Verpressen in die Flächenebene unter Bildung von Aussteifungen 9 zurückgedrängt werden. Durch Verpressen kann auch hier wieder eine ausgesteifte Aussparung 12 als Spiegelaufnahme vorgesehen sein.

Fig. 2.3 zeigt ein Ausführungsbeispiel mit einer oberen Halbschale 18, die mit einer umlaufenden Nut 16 ausgebildet ist und mit einer unteren Halbschale 19 die eine umlaufende Rippe 15 aufweist. Die Höhe der Rippe 15 ist durch Verpressen und Verdichten reduziert und damit dem Öffnungsquerschnitt der Nut 16, in der sie einpreßbar ist, angepaßt. Der verdichtete Bereich der Rippe 15 bildet die, sich auch hier wiederum innerhalb des Sonnenblendenkörpers 1 befindliche Aussteifung 9.

In Fig. 2.4 sind zwei Halbschalen 18, 19 mit Übermaß gefertigt und unter gleichzeitiger Ausbildung einer Lageraufnahme 11 auf Sollmaß verpreßt.

Fig. 2.5 zeigt die Aus- bzw. Anbildung des Filmscharniers an die Blendenkörperhälften 18, 19 mittels Verdichten. Die Anbindung ist so ausgeführt, daß beim Zusammenklappen der Hälften das Filmscharnier 20 eine zumindest bündige Linie mit der Außenkontur des Sonnenblendenkörpers 1 bildet.

Der Sonnenblendenkörper 1 nach Fig. 3.1 ist ähnlich dem anhand der Fig. 1.1 bis 1.7 beschriebenen Ausführungsbeispielen ausgeführt. Der Hauptunterschied besteht darin, daß der Sonnenblendenkörper 1 hier entsprechend Fig. 3.2 und 3.3 eine oder mehrere Vertiefungen 21, die von den Breitseiten des Sonnenblendenkörpers 1 ausgehen, aufweist. Diese ebenfalls durch Verdichten des Sonnenblendenkörpermaterials hergestellten Vertiefungen 21 oder Kerben bewirken, daß der plane Sonnenblendenkörper 1 jede beliebige Krümmung des Dachhimmels im A-Säulenbereich mitmacht und sich anpaßt.

Fig. 4.1 zeigt einen Sonnenblendenkörper 1 der außenseitig ganzflächig verdichtet ist mit gleichzeitiger Ausbildung einer Oberflächenstruktur 22 als Umhüllung. Die Oberflächenstruktur läßt sich beliebig gestalten und z.B. mit Folien-, Leder-, Waben- oder auch Holzcharakter ausbilden.

Wie im Schnitt nach Fig. 4.2 dargestellt, wird der Sonnenblendenkörper 1 (vgl. linke Fig.) mit einem Übermaß gefertigt und dann wie vorbeschrieben verpreßt mit gleichzeitiger Einbringung einer Aussparung 12 als Spiegelaufnahme. Gleichzeitig mit dem Preß- oder Verdichtungsvorgang kann ggf. die Herstellung der Oberflächenstruktur 22 erfolgen. In den Sonnenblendenkörper 1 ist hiernach noch der Spiegelrahmen 7 nebst Spiegel 8 einzupressen.

Der Gegenlagerbereich am Sonnenblendenkörper 1 kann (vgl. Fig. 4.3.1) für eine nachträgliche Montage einer Gegenlagerkrampe 23 freigehalten werden, wobei die im Maß und in Form abgestimmte Krampe (in Fig. 4.3.2 dargestellt) in den Sonnenblendenkörper 1 einzudrücken ist. In Fig. 4.3 ist der Fertigzustand gezeigt und es ist zu erkennen, daß sich die Krampe 23 im Sonnenblendenkörpermaterial hält durch hinterschnittartige Vertiefungen bzw. Erhöhungen an den Befestigungszapfen 24, die sich im Schaum eindrücken.

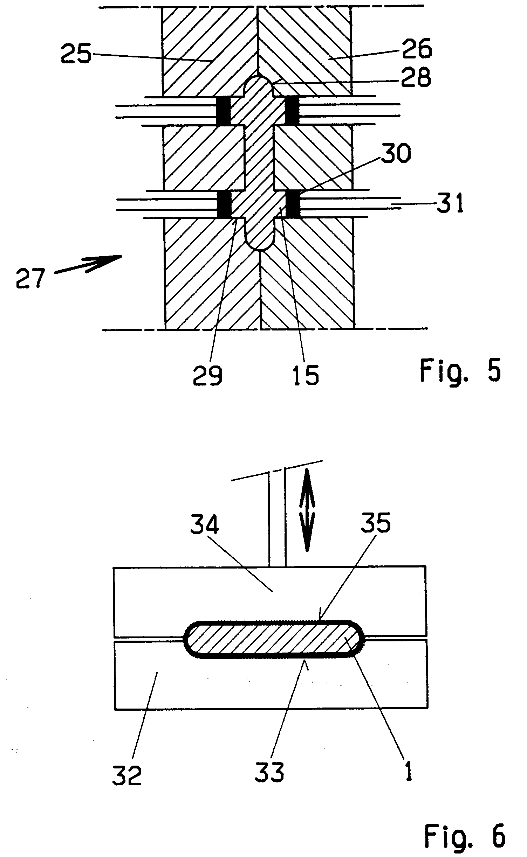

Fig. 5 zeigt eine Vorrichtung zum Herstellen eines Sonnenblendenkörpers 1. Die Vorrichtung umfaßt ein aus zwei Hälften 25, 26 bestehendes Formwerkzeug 27 mit einem Formhohlraum 28 zwischen den Hälften 25, 26. Der Formhohlraum 28 weist Hohlraumerweiterungen 29 auf, die beim Schäumen des Sonnenblendenkörpers 1 mit ausgefüllt werden. Die dadurch am Sonnenblendenkörper 1 angeformten Rippen 15 sind in die Sonnenblendenkörperebene zu verdrängen mit dem Ziel, Aussteifungszonen 9 durch Materialverdichtung zu erzeugen. Um dies zu erreichen ist das Formwerkzeug 27 mit zumindest einem Druckstempel 30 ausgerüstet, der mit dem Formhohlraum 28 und insbesondere mit der Hohlraumerweiterung 29 in Verbindung steht. Der Druckstempel 30 ist über ein Gestänge 31 od. dgl. verschiebbar und geeignet, den Querschnitt des Sonnenblendenkörpers 1 an vorgegebenen Bereichen zu verringern. Im Beispiel nach Fig. 5 sollen die Rippen 15 zurückgedrängt werden. Der oder die Druckstempel 30 sollten Mittel zum Aufheizen und Abkühlen aufweisen.

In Fig. 6 ist in vereinfachter Darstellungsmanier eine Vorrichtung zum Herstellen einer Sonnenblendenkörperumhüllung gezeigt. Die Vorrichtung umfaßt eine feststehende Unterform 32 mit einem den Sonnenblendenkörper 1 bis etwa zur Längsmittenebene aufnehmenden Hohlraum 33 und einen gegen die Unterform 32 bewegbaren Prägestempel 34. Der Prägestempel 34 weist einen den aus der Unterform 32 heraustretenden Bereich des Sonnenblendenkörpers 1 umschließenden Hohlraum 35 auf, dessen Wandungen strukturiert sind. Der Prägestempel 34 weist insbesondere auch nicht näher dargestellte Mittel zum Aufheizen und Plastifizieren der ihm benachbarten Sonnenblendenkörperoberfläche auf, denn die Anbringung der Prägestruktur soll unter Anwendung von Wärme und Druck erfolgen.

Um einen Sonnenblendenkörper 1 in einem Arbeitsgang mit einer ihn umschließenden Oberflächenstruktur versehen zu können, empfiehlt es sich, auch die Unterform 32 als Prägestempel auszubilden.

## Patentansprüche

1. Sonnenblende für Fahrzeuge mit einem relativ flachen, angenähert rechteckig gestalteten, eine Umhüllung aufweisenden Sonnenblendenkörper (1) aus Schaumkunststoff und zumindest einer sich am oder mit geringem Abstand parallel zum umlaufenden Rand desselben erstreckenden Aussteifung (9), dadurch gekennzeichnet, daß der Sonnenblendenkörper (1) einstückig mit der zumindest einen, am oder nahe des Sonnenblendenkörperrandes umlaufenden Aussteifung (9) ausgebildet ist und ebenso wie die Aussteifung aus Polypropylenpartikelschaumstoff besteht, wobei sich die zumindest eine Aussteifung (9) vom übrigen Sonnenblendenkörpermaterial durch eine wesentlich höhere Härte und Steifigkeit unterscheidet, daß die zumindest eine Aussteifung (9) sich auch über einen Eckbereich des Sonnenblendenkörpers (1) erstreckt, in dem sich eine Bohrung (10) als Lageraufnahme (11) für eine Sonnenblendenachse (3) befindet und daß die Umhüllung unmittelbar am Sonnenblendenkörper (1) durch Verändern der Oberflächenstruktur desselben angeformt ist.

2. Sonnenblende nach Anspruch 1, dadurch gekennzeichnet, daß zwei rahmenförmig umlaufende Aussteifungen (9) vorgesehen sind, die sich von den Flachseiten des Sonnenblendenkörpers (1) her aufeinanderzu in dessen Inneres hinein erstrecken.

3. Sonnenblende nach Anspruch 1, dadurch gekennzeichnet, daß die zumindest eine Aussteifung (9) sich im Inneren des Sonnenblendenkörpers (1) befindet und außenseitig mit Polypropylenpartikelschaum abgedeckt ist, der dem übrigen Sonnenblendenkörpermaterial entspricht.

4. Sonnenblende nach einem oder mehreren der Ansprüche 1 bis 3, dadurch gekennzeichnet, daß der Sonnenblendenkörper (1) aus zwei Hälften (18, 19) besteht, die in der Mittelebene des Sonnenblendenkörpers (1) aneinanderliegen, wobei zumindest eine der Hälften (18, 19) mit einer Aussteifung (9) ausgebildet ist.

5. Sonnenblende nach Anspruch 4, dadurch gekennzeichnet, daß die beiden Sonnenblendenkörperhälften (18, 19) miteinander verzahnt sind, wobei vorspringende Wülste (15) an der einen Hälfte (18, 19) in zurückspringende Nuten (16) der anderen Hälfte eingreifen.

6. Sonnenblende nach Anspruch 5, dadurch gekennzeichnet, daß die vorspringenden Wülste (15) eine wesentlich höhere Härte und Steifigkeit als das übrige Sonnenblendenkörpermaterial aufweisen.

7. Sonnenblenden nach wenigstens einem der Ansprüche 4 bis 6, dadurch gekennzeichnet, daß die beiden Sonnenblendenkörperhälften (18, 19) über ein Filmscharnier (20) miteinander verbunden sind.

8. Sonnenblende nach wenigstens einem der Ansprüche 4 bis 7, dadurch gekennzeichnet, daß zumindest eine der beiden Sonnenblendenkörperhälften (18, 19) eine sich über die gesamte Fläche erstreckende Aussteifung aufweist.

9. Sonnenblende nach wenigstens einem der vorangegangenen Ansprüche, dadurch gekennzeichnet, daß der Sonnenblendenkörper (1) eine Vertiefung (12) in einer seiner Hauptflächen aufweist, die ganzflächig oder zumindest am Umfangsrand ausgesteift ist und zur Aufnahme eines einen Spiegel (8) tragenden Rahmens (7) dient, wobei der Spiegelrahmen (7) Zapfen (13) mit hinterschnittenen Ringwülsten trägt, die in Sackbohrungen des Sonnenblendenkörpers (1) eingepreßt sind.

10. Sonnenblende nach zumindest einem der vorangegangenen Ansprüche, dadurch gekennzeichnet, daß der Sonnenblendenkörper (1) an dem der Lageraufnahme (11) abgewandten Endbereich eine randoffene Ausnehmung (5) aufweist, welche eine einen Gegenlagerstift (6) tragende Krampe (23) aufnimmt, wobei die Krampe (23) mit Verankerungszapfen (24) in Stecköffnungen des Sonnenblendenkörpers (1) eingreift.

11. Sonnenblende nach zumindest einem der vorangegangenen Ansprüche, dadurch gekennzeichnet, daß die Aussteifung (9) oder Aussteifungen (9) durch eine bleibende Verformung zusammengepreßter Materialbereiche des Sonnenblendenkörpers (1) gebildet ist bzw. sind.

12. Sonnenblende nach Anspruch 1, dadurch gekennzeichnet, daß die Umhüllung durch Erweichen der Sonnenblendenkörperoberfläche und Einbringen einer Prägestruktur (22) in die erweichte Sonnenblendenkörperoberfläche gebildet ist.

13. Sonnenblende nach wenigstens einem der vorangegangenen Ansprüche, dadurch gekennzeichnet, daß der Sonnenblendenkörper (1) an einem stirnseitigen Endbereich mit sich vom oberen zum unteren Rand durchgehend erstreckenden Einkerbungen (21), die von beiden Hauptflächen des Sonnenblendenkörpers (1) ausgehen, versehen ist.

14. Verfahren zum Herstellen einer Sonnenblende nach den Ansprüchen 1 bis 13, dadurch gekennzeichnet, daß man zunächst einen Sonnenblendenkörper (1) herstellt, indem man in einen Formhohlraum (28) einer Form (27) eine Füllung aus Polypropylenpartikeln einbringt und durch Einleiten von Dampf oder Heißluft in die Form die Partikel erhitzt, so daß sie erweichen, sich ausdehnen und miteinander verschweißen, daß man den so gewonnenen Sonnenblendenkörper (1) senkrecht zu seiner Mittelebene mit Druck und Wärme zwecks einer Materialzusammenpressung beaufschlagt und damit der Bildung zumindest einer Aussteifung (9) unterzieht und daß man den Sonnenblendenkörper (1) schließlich mit einer Umhüllung ausstattet indem man die Oberflächenschicht desselben plastifiziert und prägebearbeitet.

15. Verfahren nach Anspruch 14, dadurch gekennzeichnet, daß man im ersten Verfahrensschritt einen Sonnenblendenkörper (1) mit zumindest an einer seiner Hauptflächen aus der Sonnenblendenkörperebene hervortretenden Flächen, Rippen (15), Wülsten od. dgl. formt und daß man hiernach nur die aus der Sonnenblendenkörperebene hervortretenden Flächen, Rippen (15), Wülste od. dgl. einer Druckbehandlung unterzieht, und zwar solange, bis die hervortretenden Bereiche in die Sonnenblendenkörperebene zurückgedrängt sind.

16. Verfahren nach Anspruch 14, dadurch gekennzeichnet, daß man im ersten Verfahrensschritt einen Sonnenblendenkörper (1) mit zwei über ein Filmscharnier (20) miteinander verbundenen Hälften (18, 19) formt, daß man dabei die eine Hälfte mit zumindest einem Wulst (15) und die andere Hälfte mit zumindest einer Nut (16) ausbildet, daß man hiernach nur den Wulst (15) einer Druckbehandlung unterzieht, um die Höhe desselben unter Bildung einer Aussteifung (9) zu reduzieren und daß man den Sonnenblendenkörper (1) nach dem Erkalten aus der Form herausnimmt und den Wulst (15) in die Nut (16) durch Zusammenklappen der Sonnenblendenkörperhälften (18, 19) einbringt.

17. Verfahren nach Anspruch 14, dadurch gekennzeichnet, daß der durch Materialzusammenpressung sich an der Sonnenblendenkörperoberfläche ergebende Freiraum (16) jeweils mit Polypropylenpartikeln wieder verfüllt und ausgeschäumt wird.

18. Vorrichtung zum Durchführen des Verfahrens nach den Ansprüchen 14 bis 17, dadurch gekennzeichnet, daß dieselbe zum Herstellen des Sonnenblendenkörpers (1) ein aus zwei Hälften (25, 26) gebildetes Formwerkzeug (27) mit einem Formhohlraum (28) zwischen den Hälften (25, 26) und zumindest einen zum Formwerkzeug (27) gehörenden Druckstempel (30) umfaßt, daß der Druckstempel (30) mit dem Formhohlraum (28, 29) in Verbindung steht, um durch Verschieben den Öffnungsquerschnitt des Formhohlraums bzw. den Querschnitt des im Formhohlraum ausgebildeten Sonnenblendenkörpers (1) zu verringern und daß der zumindest eine Druckstempel (30) Mittel zum Aufheizen und Abkühlen aufweist.

19. Vorrichtung nach Anspruch 18, dadurch gekennzeichnet, daß dieselbe zum Herstellen einer Sonnenblendenkörperumhüllung eine Unterform (32) mit einem den Sonnenblendenkörper (1) bis etwa zur Längsmittenebene aufnehmenden Hohlraum (33) und einen gegen die Unterform (32) bewegbaren Prägestempel (34) mit einem den aus der Unterform vorstehenden Bereich des Sonnenblendenkörpers (1) umschließenden Hohlraum (35) umfaßt, daß die mit dem Sonnenblendenkörper (1) in Berührung kommenden Wandungsflächen des Prägestempelhohlraums (35) strukturiert sind und daß der Prägestempel (34) Mittel zum Aufheizen und Plastifizieren der ihm benachbarten Sonnenblendenkörperoberfläche aufweist.

20. Vorrichtung nach Anspruch 19, dadurch gekennzeichnet, daß auch die Unterform (32) als Prägestempel (34) mit strukturierter Hohlraumwandung und Mitteln zum Aufheizen und Plastifizieren der ihm benachbarten Sonnenblendenkörperoberfläche ausgebildet ist.

## Claims

1. Sun visor for vehicles, having a relatively flat, virtually rectangular sun-visor body (1), which has a covering and consists of foamed plastic, and having at least one stiffening means (9) which extends along, or at a small distance parallel to, the peripheral border of said body, characterized in that the sun-visor body (1) is formed integrally with the at least one stiffening means (9), running around along, or in the vicinity of, the sun-visor-body border, and, as does the stiffening means, consists of polypropylene-particle foam, the at least one stiffening means (9) differing from the rest of the sun-visor-body material by being considerably harder and stiffer, in that the at least one stiffening means (9) also extends over a corner region of the sun-visor body (1), in which corner region a bore (10) is located as bearing receiving means (11) for a sun-visor spindle (3), and in that the covering is directly integrally formed on the sun-visor body (1) by the surface texture of the latter being changed.

2. Sun visor according to Claim 1, characterized in that two stiffening means (9) which run around in the form of a frame are provided, and these stiffening means extend from the flat sides of the sun-visor body (1), towards one another, into the interior of said body.

3. Sun visor according to Claim 1, characterized in that the at least one stiffening means (9) is located in the interior of the sun-visor body (1) and is covered on the outside with polypropylene-particle foam, which corresponds to the rest of the sun-visor-body material.

4. Sun visor according to one or more of Claims 1 to 3, characterized in that the sun-visor body (1) comprises two halves (18, 19) which rest against one another in the centre plane of the sun-visor body (1), at least one of the halves (18, 19) being formed with a stiffening means (9).

5. Sun visor according to Claim 4, characterized in that the two sun-visor-body halves (18, 19) are intermeshed with one another, projecting beads (15) on one half (18, 19) engaging into recessed grooves (16) of the other half.

6. Sun visor according to Claim 5, characterized in that the projecting beads (15) are considerably harder and stiffer than the rest of the sun-visor-body material.

7. Sun visor according to at least one of Claims 4 to 6, characterized in that the two sun-visor-body halves (18, 19) are connected to one another via a film hinge (20).

8. Sun visor according to at least one of Claims 4 to 7, characterized in that at least one of the two sun-visor-body halves (18, 19) has a stiffening means which extends over the entire surface area.

9. Sun visor according to at least one of the preceding claims, characterized in that the sun-visor body (1) has a depression (12) in one of its main surfaces, this being stiffened over the entire surface area, or at least along the border, and being used for receiving a frame (7) which bears a mirror (8), the mirror frame (7) bearing pegs (13) with undercut annular beads which are pressed into blind bores of the sun-visor body (1).

10. Sun visor according to at least one of the preceding claims, characterized in that, at the end region remote from the bearing receiving means (11), the sun-visor body (1) has an open-border recess (5) which receives a cramp (23) which bears a counter-bearing pin (6), the cramp (23) engaging, by means of anchoring pegs (24), into plug-in openings of the sun-visor body (1).

11. Sun visor according to at least one of the preceding claims, characterized in that the stiffening means (9) is or are formed by a permanent deformation of compressed material regions of the sun-visor body (1).

12. Sun visor according to Claim 1, characterized in that the covering is formed by the sun-visor-body surface being softened and an embossed texture (22) being introduced into the softened sun-visor-body surface.

13. Sun visor according to at least one of the preceding claims, characterized in that, at an end region, the sun-visor body (1) is provided with notches (21) which run continuously from the top border to the bottom border and extend from the two main surfaces of the sun-visor body (1).

14. Process for producing a sun visor according to Claims 1 to 13, characterized in that first of all a sun-visor body (1) is produced by a charge of polypropylene particles being introduced into a cavity (28) of a mould (27) and steam or hot air being directed into the mould in order to heat the particles, with the result that the latter are softened, expand and become welded to one another, in that the resulting sun-visor body (1) undergoes the effect of pressure and heat, perpendicularly with respect to its centre plane, for the purpose of material compression and is thus subjected to the formation of at least one stiffening means (9), and in that, finally, the sun-visor body (1) is provided with a covering by the surface layer of the said sun-visor body being plastified and embossed.

15. Process according to Claim 14, characterized in that, in the first process step, a sun-visor body (1) with surfaces, ribs (15), beads or the like projecting from the sun-visor-body plane on at least one of the main surfaces of said sun-visor body is formed, and in that, thereafter, only the surfaces, ribs (15), beads or the like projecting from the sun-visor-body plane are subjected to pressure treatment, to be precise until the projecting regions are forced back into the sun-visor-body plane.

16. Process according to Claim 14, characterized in that, in the first process step, a sun-visor body (1) with two halves (18, 19) connected to one another by a film hinge (20) is formed, in that, during this, one half is formed with at least one bead (15) and the other half is formed with at least one groove (16), in that, thereafter, only the bead (15) is subjected to pressure treatment, in order to reduce the height of the same, a stiffening means (9) being formed in the process, and in that, after cooling, the sun-visor body (1) is removed from the mould, and the bead (15) is introduced into the groove (16) by the sun-visor-body halves (18, 19) being swung together.

17. Process according to Claim 14, characterized in that the free space (16) obtained on the sun-visor-body surface by material compression is filled again in each case by polypropylene particles and the latter are expanded therein.

18. Apparatus for carrying out the process according to Claims 14 to 17, characterized in that, for producing the sun-visor body (1), said apparatus comprises a mould (27), which is formed from two halves (25, 26) and has a cavity (28) between the halves (25, 26) as well as at least one pressure-exerting ram (30) which belongs to the mould (27), in that the pressure-exerting ram (30) is in connection with the cavity (28, 29) in order, by virtue of displacement, to reduce the opening cross-section of the cavity or the cross-section of the sun-visor body (1) formed in the cavity, and in that the at least one pressure-exerting ram (30) has heating and cooling means.

19. Apparatus according to Claim 18, characterized in that, for producing a sun-visor-body covering, said apparatus has a bottom mould (32), with a cavity (33) which receives the sun-visor body (1) to approximately the longitudinal centre plane, as well as an embossing ram (34) which can be moved towards the bottom mould (32) and has a cavity (35) which encloses that region of the sun-visor body (1) which projects from the bottom mould, in that those wall surfaces of the embossing-ram cavity (35) which come into contact with the sun-visor body (1) are textured, and in that the embossing ram (34) has means for heating and plastifying the sun-visor-body surface adjacent to it.

20. Apparatus according to Claim 19, characterized in that the bottom mould (32) is also designed as an embossing ram (34) with textured cavity wall and means for heating and plastifying the sun-visor-body surface adjacent to it.

## Revendications

1. Pare-soleil pour véhicule avec un corps (1) en mousse plastique, présentant une enveloppe relativement plate, de forme approximativement rectangulaire et au moins un renfort (9) s'étendant sur le bord périphérique de celui-ci ou à une courte distance, caractérisé en ce que le corps (1) du pare-soleil est réalisé d'une seule pièce avec le au moins un renfort (9) périphérique sur ou à proximité du corps du pare-soleil et est réalisé comme le renfort en mousse de particules de polypropylène, le au moins un renfort (9) se distinguant du reste du matériau du corps du pare-soleil par une dureté et une rigidité nettement plus grandes, en ce que le au moins un renfort (9) s'étend aussi sur une zone d'angle du corps (1), dans laquelle se trouve un perçage (10) servant de palier (11) à un axe (3) du pare-soleil et en ce que l'enveloppe est directement formée sur le corps (1) par modification de la structure de la surface de celui-ci.

2. Pare-soleil selon la revendication 1, caractérisé en ce qu'il est prévu deux renforts (9) périphériques en forme de cadre, qui s'étendent l'un vers l'autre, à partir des côtés plats du corps (1), à l'intérieur de celui-ci.

3. Pare-soleil selon la revendication 1, caractérisé en ce que le au moins un renfort (9) se trouve à l'intérieur du corps (1) et est recouvert sur le côté extérieur avec de la mousse de particules de polypropylène, qui correspond au reste du matériau du corps du pare-soleil.

4. Pare-soleil selon une ou plusieurs des revendications 1 à 3, caractérisé en ce que le corps (1) est fait de deux moitiés (18, 19), qui s'appliquent l'une contre l'autre dans le plan médian du corps (1), l'une au moins des moitiés (18, 19) présentant un renfort (9).

5. Pare-soleil selon la revendication 4, caractérisé en ce que les deux moitiés (18, 19) du corps du pare-soleil engrènent entre elles, des bourrelets (15) saillants sur une moitié (18, 19) s'engageant dans des rainures (16) en retrait de l'autre moitié.

6. Pare-soleil selon la revendication 5, caractérisé en ce que les bourrelets (15) saillants présentent une dureté et une rigidité nettement plus grandes que le reste du matériau du corps du pare-soleil.

7. Pare-soleil selon l'une au moins des revendications 4 à 6, caractérisé en ce que les deux moitiés (18, 19) du corps du pare-soleil sont reliées entre elles par une charnière en film (20).

8. Pare-soleil selon l'une au moins des revendications 4 à 7, caractérisé en ce que l'une au moins des deux moitiés (18, 19) du corps du pare-soleil présente un renfort s'étendant sur toute la surface.

9. Pare-soleil selon l'une au moins des revendications précédentes, caractérisé en ce que le corps (1) présente un creux (12) dans l'une de ses surfaces principales, qui est renforcé sur toute sa surface ou au moins sur le bord périphérique et sert à loger un cadre (7), portant un miroir (8), le cadre (7) du miroir portant des tenons (13) avec des bourrelets annulaires détalonnés, qui sont pressés à l'intérieur de trous borgnes du corps (1) du pare-soleil.

10. Pare-soleil selon l'une au moins des revendications précédentes, caractérisé en ce que le corps (1) présente, sur la zone d'extrémité tournée à l'opposé du palier (11), un évidement (5) ouvert sur les bords, qui loge une patte (23) portant une tige de contre-appui, la patte (23) s'engageant avec des tenons d'ancrage (24) dans des ouvertures d'insertion du corps (1) du pare-soleil.

11. Pare-soleil selon l'une au moins des revendications précédentes, caractérisé en ce que le renfort (9) ou les renforts (9) est ou sont formés par une déformation permanente de zones de matériaux comprimés du corps (1) du pare-soleil.

12. Pare-soleil selon la revendication 1, caractérisé en ce que l'enveloppe est formée par ramollissement de la surface du corps du pare-soleil et mise en place d'une structure estampée (22) dans la surface ramollie du corps du pare-soleil.

13. Pare-soleil selon l'une au moins des revendications précédentes, caractérisé en ce que le corps (1) est pourvu sur une zone d'extrémité frontale d'encoches (21), s'étendant en continu du bord supérieur au bord inférieur, qui partent des deux surfaces principales du corps (1) du pare-soleil.

14. Procédé de fabrication d'un pare-soleil selon les revendication 1 à 13, caractérisé en ce qu'on réalise d'abord un corps (1) de pare-soleil en introduisant dans une cavité (28) d'un moule (27) une garniture de particules de polypropylène et en chauffant les particules par introduction de vapeur ou d'air chaud dans le moule, de sorte qu'elles ramollissent, se dilatent et se soudent entre elles, en ce qu'on soumet le corps (1) du pare-soleil ainsi obtenu, perpendiculairement à son plan médian, à une pression et à la chaleur en vue d'une compression du matériau et on le soumet ainsi à la formation d'au moins un renfort (9) et en ce qu'enfin on équipe le corps (1) d'une enveloppe en plastifiant et en estampant sa couche superficielle.

15. Procédé selon la revendication 14, caractérisé en ce qu'au cours de la première étape de procédé on forme un corps (1) de pare-soleil avec au moins sur l'une de ses surfaces principales, des surfaces, nervures (12), bourrelets ou similaires ressortant du plan du corps du pare-soleil et en ce qu'on soumet ensuite uniquement les surfaces, nervures (15) , bourrelets ou similaires, ressortant du plan du corps du pare-soleil, à un traitement de pression, et ce jusqu'à ce que les zones ressortantes soient repoussées dans le plan du corps du pare-soleil.

16. Procédé selon la revendication 14, caractérisé en ce qu'au cours de la première étape de procédé on forme un corps (1) de pare-soleil avec deux moitiés (18, 19) reliées entre elles par une charnière en film (20), en ce qu'on forme une moitié avec au moins un bourrelet (15) et l'autre moitié avec au moins une rainure (16), en ce qu'ensuite on soumet uniquement le bourrelet (15) à un traitement de pression, afin de réduire la hauteur de celui-ci en formant un renfort (9) et en ce qu'après refroidissement, on enlève le corps (1) du pare-soleil du moule et on introduit le bourrelet (15) dans la rainure (16) par repliement des moitiés (18, 19) du corps du pare-soleil.

17. Procédé selon la revendication 14, caractérisé en ce que l'espace libre (16) résultant à la surface du corps du pare-soleil, par compression du matériau, est à nouveau rempli de particules de polypropylène que l'on soumet à une expansion.

18. Dispositif pour la mise en oeuvre du procédé selon les revendications 14 à 17, caractérisé en ce que celui-ci comporte, pour la fabrication du corps (1) du pare-soleil, un moule (27) formé de deux moitiés (25, 26), avec une cavité (28) entre les moitiés (25, 26) et au moins un poinçon (30) faisant partie du moule (27), en ce que le poinçon (30) est en liaison avec la cavité (28, 29) du moule, afin de réduire par déplacement la section transversale d'ouverture de la cavité du mou le ou la section transversale du corps (1) du pare-soleil formée dans la cavité du moule, et en ce que le au moins un poinçon (30) comporte des moyens de chauffage et de refroidissement.

19. Dispositif selon la revendication 18, caractérisé en ce que celui-ci comporte, pour la fabrication d'une enveloppe de corps de pare-soleil, un moule inférieur (32) avec une cavité (33), logeant le corps (1) du pare-soleil jusqu'à environ le plan médian longitudinal et un poinçon d'estampage (34), déplaçable contre le moule inférieur (32) avec une cavité (35) enfermant la zone du corps (1), dépassant du moule inférieur, en ce que les surfaces de paroi de la cavité du poinçon d'estampage (35), venant en contact avec le corps (1), sont structurées et en ce que le poinçon d'estampage (34) comporte des moyens de chauffage et de plastification de la surface voisine du corps de pare-soleil.

20. Dispositif selon la revendication 19, caractérisé en ce que le moule inférieur (32) est également configuré en poinçon d'estampage (34) avec paroi de cavité structurée et des moyens de chauffage et de plastification de la surface voisine du corps de pare-soleil.
